(19) Europäisches Patentamt

European Patent Office

Office européen des brevets

(11) Veröffentlichungsnummer: **0 418 574 A2**

(12) **EUROPÄISCHE PATENTANMELDUNG**

(21) Anmeldenummer: **90116020.0**

(22) Anmeldetag: **22.08.90**

(51) Int. Cl.⁵: **G01M 1/00**

(30) Priorität: **08.09.89 DE 3930043**

(43) Veröffentlichungstag der Anmeldung:
**27.03.91 Patentblatt 91/13**

(84) Benannte Vertragsstaaten:
**DE FR GB**

�]Anmelder: **DR. REUTLINGER + SOEHNE
GmbH & Co. KG
Riedstrasse 6**
**W-6100 Darmstadt(DE)**

(72) Erfinder: **Krause, Jürgen, Dipl.-Ing.(FH)
Aussiger Strasse 30 (Kleestadt)
W-6114 Gross-Umstadt(DE)**

(74) Vertreter: **Weisse, Jürgen, Dipl.-Phys. et al
Bökenbusch 41 Postfach 11 03 86
W-5620 Velbert 11-Langenberg(DE)**

(54) **Steuerung für Auswuchtmaschinen.**

㊗ Rechnergestützte Steuerung von Auswuchtmaschinen mit gesicherter und einfacher Datenbehandlung beim Auswuchten umlaufender Körper (10) mittels einer Kennung, die den Wuchtkörperdatenspeicher (36) aktiviert und hiervon unabhängig die Werkstücke (10, 42) oder den Arbeitsauftrag (70) in Form
eines Bar-Codes (43) oder einer Klarschrift begleitet.
Die Zuverlässigkeit der Bearbeitung wird durch die
unveränderbaren spezifischen Vorgaben der Kennung, durch die an der Auswuchtmaschine eingeschränkte freie Dateneingabe mit für den Bediener
zugänglichem Tastenfeld (48) und oder auch durch
die selbsttätige Registrierung (52, 54, 56) von Bearbeitungsergebnissen bewirkt.

Fig. 1

EP 0 418 574 A2

## STEUERUNG FÜR AUSWUCHTMACHINE

### Technisches Gebiet

Die Erfindung betrifft eine Steuerung zu einer Maschine zum Auswuchten der Unwucht eines umlaufenden Körpers, enthaltend
(a) Mittel zur Erzeugung von Unwuchtsignalen,
(b) Mittel zum Lesen von Informationsträgern,
(c) eine Tastatur zur Dateneingabe,
(d) einen digitalen Rechner mit einem unter einem Code verriegelten Wuchtkörper-datenspeicher und einem Arbeitsspeicher.

### Zugrundeliegender Stand der Technik

Auswuchtmaschinen enthalten einen maschinentechnischen Teil, in welchen das Werkstück in Rotation versetzt wird. An diesem maschineentechnischen Teil sind Aufnehmer vorgesehen, welche auf die Wirkungen einer Unwucht des Werkstückes ansprechen und diese in elektrische Unwuchtsignale umsetzen. Diese Aufnehmer messen beispielsweise die durch die Unwucht hervorgerufenen Lagerkräfte. Die so erhaltenen Unwuchtsignale müssen verarbeitet werden, um Unwuchtwerte zu erhalten, die den an gewünschten Stellen abzunehmenden oder hinzuzufügenden Massen entsprechen. Diese Signalverarbeitung erfolgt unter Benutzung von werkstückspezifischen Daten. Wenn beispielsweise von den Aufnehmern die durch die Unwucht in den Lagerebenen erzeugten Kräfte gemessen werden, dan umfassen solche werkstückspezifischen Daten die Abstände der Ausgleichsebenen, in denen der Ausgleich der Unwucht stattfinden soll, von den Lagerebenen und voneinander, ferner die Ausgleichsradien, an denen der Ausgleich in den Ausgleichsebenen erfolgen soll, oder die Angabe, ob die Korrektur der Unwucht durch Hinzufügen oder Abnehmen von Masse erfolgen soll.

Die Verarbeitung der Unwuchtsignale erfolgt üblicherweise durch einen digitalen Rechner, auf welchen die Unwuchtsignale nach A/D-Wandlung über eine geeignete Schnittstelle aufgeschaltet werden. Die Eingabe der werkstückspezifischen Daten erfolgt dabei an dem Rechner der Auswuchtmaschine über ein Tastenfeld.

Wenn wiederholt der gleiche Werkstücktyp auszuwuchten ist, dann werden bekanntermaßen die zugehörigen werkstückspezifischen Daten in Festkörperspeichern (beispielsweise batteriegepufferten RAMs) oder auf rotierenden Plattenspeichern (Disketten oder Festplattenspeichern) zusammen mit einem werkstückspezifischen Code abgespeichert. Tritt der gleiche Werkstücktyp zur Auswuchtung wieder auf, dann werden die werkstückspezifischen daten mit Hilfe des Codes wieder aufgerufen und in den Arbeitsspeicher des Rechners eingegeben.

Die Eingabe der werkstückspezifischen Daten in den Rechner erfolgt durch den Bediener der Auswuchtmaschine oder durch einen Einrichter direkt am Rechner der Auswuchtmaschine. Dieser Bediener oder Einrichter bewirkt auch das Eingeben der Daten in den Speicher für das Auswuchten von verschiedenen Wuchtkörpern des gleichen Typs.

Die Verwendung von Plattenspeichern hat den Nachteil, daß diese rotierende Teile enthalten, welche einem Verschleiß unterliegen und stoßempfindlich sind. Daher werden in der Praxis zur Ablage der über Code wiederaufrufbaren, werkstückspezifischen Daten Festkörperspeicher bevorzugt.

Die bekannten Auswuchtmaschinen und die damit vorgenommene Arbeitsweise weisen eine Reihe von Nachteilen auf:

Die Anzahl der abspeicherbaren Sätze von werkstückspezifischen DAten ist beschränkt durch die Kapazität dieser Speicher. Erfahrungsgemäß ist diese Kapazität stets zu knapp bemessen. Es muß daher versucht werden, die in den Speicher eingelesenen Daten auf ein Minimum zu beschränken. Über die Grunddaten hinausgehende Zusatzinformationen oder Hinweise, die wichtig sein können, können meist nicht abgespeichert werden.

Der Bediener muß den Code kennen, mit dem die werkstückspezifischen Daten wieder aufgerufen werden können. Das erfordert häufig zeitaufwendige Rückfragen und birgt die Gefahr von Fehlern in sich.

Die Eingabe der Daten in den Speicher des Rechners kann nur an der Auswuchtmaschine selbst erfolgen. Das setzt die Bedienung durch entsprechend qualifiziertes Personal voraus.

In der Regel erfolgt die Eingabe der werkstückspezifischen Daten in den Speicher durch den Bediener der Auswuchtmaschine. Eine Kontrolle der eingegebenen Daten erfolgt in der Regel nicht. Eine solche Kontrolle findet allenfalls statt, wenn die Auswuchtergebnisse nicht den Anforderungen entsprechen.

Bei der Eingabe der werkstückspezifischen Daten in den Speicher durch den Bediener der Auswuchtmaschine selbst besteht eine stete Zugriffsmöglichkeit auf die abgespeicherten Daten und damit auch die Möglichkeit, die Daten unerlaubt zu ändern, beispielsweise die Toleranzvorgaben.

In der Regel sind werkstückspezifische Daten nur einmal abgespeichert vorhanden, nämlich im Rechner selbst. Sicherheitskopien der Daten sind nicht vorhanden. Das ist besonders nachteilig, wenn ein Speicherbaustein ausfällt oder wenn nach längerer Zeit die die RAMs speisenden Pufferbatterien altern.

Um den Bediener bei der Eingabe zu entlasten, wird auch bereits am Rechner der Maschine ein Lesegerät vorgesehen, von dem ambulante Datenkarten (Lochstreifen, Lochkarten oder Magnetstreifen-Karten) eingelesen werden, wie sie z. B. zur Werkzeugmaschineensteuerung oder als Türöffner handelsüblich sind. Diese werden benutzt, um die Verarbeitung von werkstückspezifischen Daten bei einer Auswuchtmaschine auszulösen.

Die ambulanten Datenträger werden auch als Chipkarten ausgebildet, die mit Microprozessoren bestückt sein können.

Mit derartigen Mitteln kann das Lesegerät dem Rechner die werkstückspezifischen Daten zur Weiterverarbeitung übergeben.

Zur Vermeidung unwirtschaftlich großer Speicherkapazität für vorgehaltene werkstückspezifische Datensammlungen oder bei kleinen Losgrößen ist es aber erforderlich, daß der Bediener die Aufgabe erhält, anstelle oder neben der durch die Datenkarten eingegebenen Daten mit oder ohne im Rechner hinterlegtes Pass- oder Schlüsselwort auf dem Wege über eine Tastatur aus dem Gedächtnis Daten einzugeben.

Störend wirkt sich hierbei aus, daß vielfach Rückfragen erforderlich werden, denn die Bedienung vermag nur selten über die erforderlichen Informationen zu verfügen.

Nach der Aufschaltung der Tastatur auf den Rechner besteht auch für den Bediener die Möglichkeit, die Daten alle oder teilweise zufällig oder absichtlich zu löschen, zu überschreiben, zu verändern oder auch zu verwechseln, so auch die für seine Lohnabrechnung, den Auswuchtprozeß oder die Qualität des Auswuchtens relevanten Werte.

Die Datenkarten sind für das handling (Mehrfachverwendung) im Werkstattbetrieb auf Dauer nicht geeignet, da sie der Verschmutzung oder mechanischen Beschädigung unterliegen.

## Offenbarung der Erfindung

Der Erfindung liegt die Aufgabe zugrunde, wesentliche Teile der Daten, die auftrags- oder werkstückbezogen sind, aus dem Arbeitsspeicher fernzuhalten, aber dennoch automatisch und weitgehend unabhängig von der Tastatureingabe fehlerfrei beim Auswuchten der Werkstücke für den einzelnen Arbeitsauftrag (Einzelstück, Fertigungs-Los) bereit zu haben.

Erfindungsgemäß werden diese Aufgaben dadurch gelöst, daß

(e) ein ambulanter Informationsträger eine Kennung (Bar-Code oder Klarschrift) aufweist, die mittels eines Lese-Eingabegerätes einen auftragsspezifischen und / oder werkstückspezifischen Code im Wuchtkörperdatenspeicher anspricht.

Informationsträger als Bar-Code sind in Industrie und Handel üblich geworden. Sie haben den Vorzug, daß die Herstellung datentechnisch einfach, die Teilezugehörigkeit problemlos und die Einweg-Nutzung bewährt sind. der Bar-Code wird auf einem der den Arbeitsauftrag begleitenden Papiere wie Lohnschein, Arbeitskarte, Zeichnung o.a. oder auf (selbstklebenden) Etiketten aufgedruckt. Der Bar-Code kann aber auch unmittelbar auf dem (oder auf den) auzuwuchtenden Teil(en), den zugehörigen Verpackungen oder Paletten usw. unmittelbar oder mit selbstklebenden oder angehängten Etiketten vermerkt sein.

Trifft der Arbeitsauftrag an der Wuchtmaschine ein, sind zugleich die Informationen des Bar-Codes verfügbar: Durch Einlesen des Bar-Code-Lesegerätes wird der Wuchtkörperdatenspeicher im für die Abwicklung des Auftrages zutreffenden Bereich aktiviert und der Verarbeitungsprozeß eingeleitet.

Da aber - alternativ - inzwischen auch Klarschriftleser, sogenannte Scanner, handelsüblich geworden sind, werden die Daten mit dem Informationsträger (Arbeitspapier, Etikett usw.) in einer allgemein lesbaren und zugleich zur Datenübertragung nutzbaren Weise in den Rechner eingebracht.

Die Erfindung löst aber auch die Aufgabe, auf dem auszuwuchtenden, eingespannten Werkstück den Bar-Code oder die Klarschrift unter Rotation an einem Lesegerät vorbeizuführen und die Daten auf diese Weise streng teilgebunden in den Rechner zu geben.

Alle diese erfindungsgemäßen Mittel ermöglichen dem Rechner, mitgebrachte Daten und - falls erforderlich - durch die Bedienung für sie zugelassene Dateneingabe (z.B. Personenkennung) mit den gespeicherten Daten und den Daten aus den Unwuchtsignalen zusammen zu führen, um das Auswuchten in einer für die Bedienung unbeeinflußbaren Weise durchführbar zu machen. Zusätzlich kann das Ergebnis des Auswuchtens angezeigt, gespeichert und / oder als Qualitätsprotokoll, Entlohnungsgrundlage usw. ausgedruckt werden.

## Kurze Beschreibung der Zeichnungen

Fig.1 ist eine schematische Darstellung und zeigt eine Auswuchtmaschine mit einem auszuwuchtenden Werkstück, bei welchem die Lagerkräfte in Lagerebenen gemessen werden, einen Analog-Digital-Wandler, ein Papier oder Werkstück, einen Bar-Code bzw. eine Klarschrift als einen Informationsträger, einen Bar-Code- bzw.

Klarschrift-Leser, eine Eingabetastatur, ein Anzeigegerät, einen Drucker und einen zentralen Rechner.

Fig.2 zeigt einen Rechner, der entweder der zentrale Rechner am Arbeitsplatz der Auswuchtmaschine, der Rechner in der Arbeitsvorbereitung oder in einem anderen technischwen Büro ist und der den Bar-Code- oder den Klarschriftträger ausgibt, mit denen die Daten im Wuchtkörperdatenspeicher aktiviert werden und der den Wuchtprozeß veranlaßt und verfolgt.

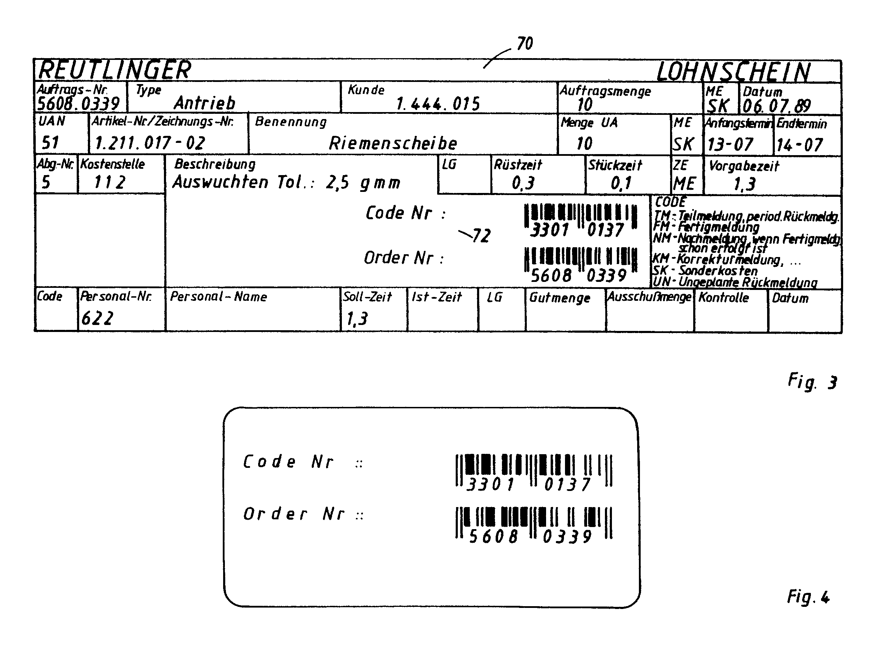

Fig.3 vermittelt die Druckform eines Arbeitspapieres mit Informationsträger als Bar-Code. Statt des Bar-Codes können Daten in einem Klarschriftfeld vorgegeben werden.

Fig.4 stellt ein Etikett mit Bar-Code oder Klarschrift dar, wie es das Werkstück begleitet.

## Bevorzugte Ausführungen der Erfindung

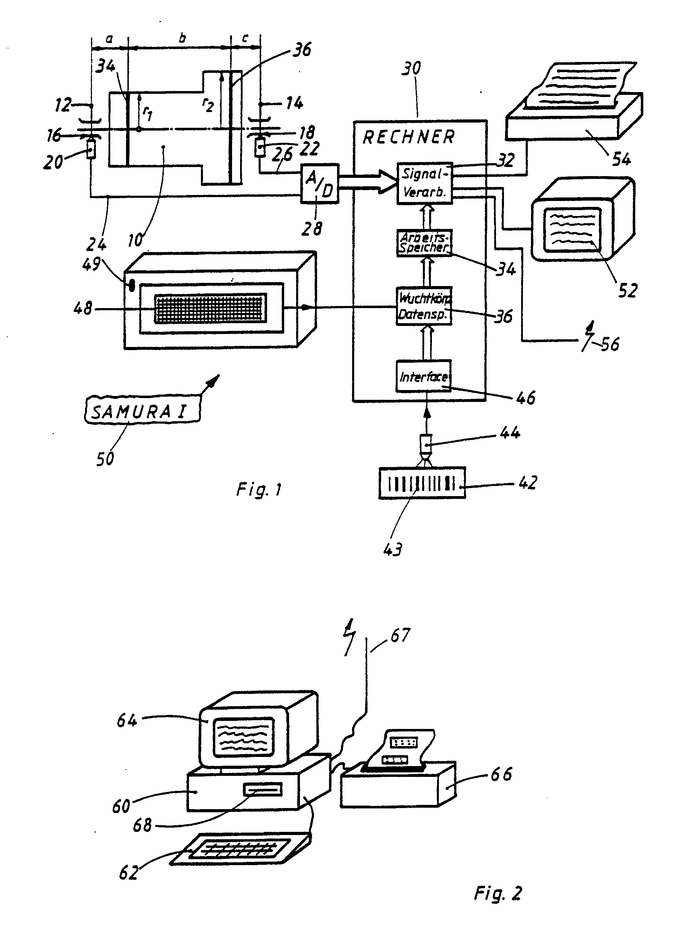

In Fig.1 ist mit 10 ein auszuwuchtender Rotor bezeichnet. Der Rotor 10 iat in zwei Lagerebenen 12 und 14 in Lagern 16 bzw. 18 überkritisch, also praktisch starr gelagert. Die durch die Unwucht des Rotors in den Lagerebenen 12,14 erzeugten Kräfte werden durch kraftmessende Aufnehmer 20 bzw. 22 gemessen und in elektrische Unwuchtsignale umgesetzt. Die analogen Unwuchtsignale von den Aufnehmern 20 und 22 sind über Leitungen 24 bzw. 26 auf eine Schnittstelle 28 mit Analog-Digital-Wandlung (A/D) aufgeschaltet und werden in entsprechende digitale Signale umgesetzt. Diese digitalen Signale werden einem digitalen Rechner 30 zugeführt und erfahren dort eine digitale Signalverarbeitung, die durch Block 32 dargestellt ist. Die Signalverarbeitung hat den Zweck, digitale Unwuchtwerte zu erhalten, welche die in "Ausgleichsebenen" 34 und 36 abzunehmenden oder hinzuzufügenden Massen angibt. Die Ausgleichsebenen sind dabei so gewählt, daß sich in ihnen die Abnahme oder das Hinzufügen von Masse besonders günstig bewerkstelligen läßt. Die Ausgleichsebenen 34 und 36 fallen im allgemeinen nicht mit den Lagerebenen zusammen. Der Rechner muß daher die in den Lagerebenen 12 und 14 gemessenen Kräfte auf die Ausgleichsebenen umrechnen. Die auf die Ausgleichsebenen 34 und 36 bezogenen Kräfte sind Linearkombinationen der Kräfte, die in den Lagerebenen 12 und 14 gemessen werden. Die Koeffizienten sind Verhältnisse der Abstände der Lager-und Ausgleichsebenen und des Abstandes der Ausgleichsebenen. Das sind bekannte Beziehungen, die deshalb hier nicht im einzelnen abgehandelt werden. Außerdem müssen die Ausgleichsradien in den beiden Ausgleichsebenen 12 und 14, nämlich $r_1$ bzw. $r_2$, berücksichtigt werden. Die Abstände a,b und c und die Radien $r_1$ und $r_2$ sowie eventuelle weitere Größen stellen die "werkstückspezifischen Daten" dar. Mit diesen Daten arbeitet die durch Block 32 dargestellte Signalverarbeitung zur Bestimmung der auszugleichenden Unwuchtwerte. Die werkstückspezifischen Daten sind in einem Arbeitsspeicher gespeichert, wie er durch Block 34 dargestellt wird.

Der Rechner verfügt über den Wuchtkörperdatenspeicher, den Block 36 darstellt. In diesen Speicher gelangen verschiedene Informationen, die sich von den werkstückspezifischen Daten mehr oder weniger unterscheiden.

Das Arbeitspapier, Etikett oder Teil 42 selbst weist den Informationsträger 43 für den Bar-Code oder die Klarschrift zum Eingeben von werkstück- und/oder wuchtkörperspezifischer Daten auf, welch mittels Lesegerät 44 in das Interface 46 und mit seiner Hilfe in den Rechner gelangen. Ein derartiger Dateneinsatz schließt fehlerhafte Zuordnungen mit höchster Wahrscheinlichkeit und bewußte Manipulation in jedem Fall aus.

Zur Eingabe von einzelnen, weder den Wuchtprozeß an sich noch die Qualität des Auswuchtens und auch nicht die darauf entfallende Entlohnung im Ganzen beeinflussende, jedoch durchaus den Auftrag und die Personalzugehörigkeit betreffende Daten steht der Bedienung eine Tastatur 48 bereit, die mit oder ohne abschließbarem Kontakt, abschließbarer Abdeckung 49 oder erst nach Eingabe eines Passwortes 50 zur Verfügung steht.

Falls die Losgröße der Wuchtkörper keine wirtschaftliche Anwendung des bisher beschriebenen Verfahrens zuläßt, kann der Bedienung außerhalb der zuvor beschriebenen Einschränkung mittels geeigneter Programmierung die Dateneingabe ermöglicht sein.

Für die Bedienung und das Überwachungspersonal, namentlich die Qualitätskontrolle können ein Datensichtgerät 52 und ein Datenausgabegerät 54 zur Verfügung stehen. Schließlich können Daten in ein Datennetzwerk 56 eingespeist werden.

Der Erzeugung des Bar-Codes oder der Klarschrift kommt besondere Bedeutung zu. So können diese durch Berechtigte mit der Tastatur 48 auf dem an den Rechner 30 angeschlossenen Drucker 54 oder aber an beliebigem anderem PC-Arbeitsplatz mit Rechner 60, Tastatur 62, Bildschirm 64 und Drucker 66 hergestellt werden. Vorzugsweise können hierbei vorbereitete Daten aus dem Speicher des Rechners, dem Netzwerkanschluß 67 oder von Disketten im Diskettenlaufwerk 68 entnommen werden.

Informationsträger mit Klarschrift sind wenig erklärungsbedürftig: Die Daten sind in geeigneter Anordnung und Druckqualität für den Scanner annehmbar gemacht. Informationsträger 70 mit Bar-Code zeigen für den Code-Leser codierte Zeichen 72 als Daten mit der erfindungegemäßen Aufgabe.

**Ansprüche**

1. Steuerung für eine Maschine zum Auswuchten eines umlaufenden Körpers, enthaltend

(a) Mittel (20, 22) zur Erzeugung von Unwuchtsignalen,

(b) eine Tastatur (48) zur Dateneingabe

(c) einen digitalen Rechner (30) mit einem unter einem Code verriegelten Wuchtkörperdatenspeicher (36) und einem Arbeitsspeicher (34) und **dadurch gekennzeichnet, daß**

(d) ein ambulanter Informationsträger (43) Daten als Kennung aufweist, die mittels eines Lese-Eingabegerätes (44, 46) einen auftragsspezifischen und / oder werkstückspezifischen Code im Wuchtkörperdatenspeicher (36) ansprechen.

2. Steuerung nach Anspruch 1, **dadurch gekennzeichnet, daß** der Informationsträger ein Bar-Code ist.

3. Steuerung nach Anspruch 1, **dadurch gekennzeichnet, daß** der Informationsträger eine Klarschrift-Kennung ist.

4. Steuerung nach einem der Ansprüche 1 bis 3, **dadurch gekennzeichnet, daß** der Informationsträger sich auf einem (selbstklebenden) Etikett befindet.

5. Steuerung nach einem der Ansprüche 1 bis 4, **dadurch gekennzeichnet, daß** der Informationsträger (72) auf auftragbegleitendem Arbeitspapier (70) ist.

6. Steuerung nach einem der Ansprüche 1 bis 5, **dadurch gekennzeichnet, daß** Informationsträger (43) auf einem Werkstück selbst, einer Anzahl der Werkstücke oder allen Werkstücken (42) sind.

7. Steuerung nach Anspruch 6, **dadurch gekennzeichnet, daß** das Lesegerät (44) die Daten vom in der Auswuchtmaschine eingespannten Werkstück selbsttätig abliest.

8. Steuerung nach einem der Ansprüche 1 bis 7, **dadurch gekennzeichnet, daß** die durch die Kennung im Speicher (36) aufgerufenen Daten zusammen mit den erzeugten Unwuchtsignalen den Rechner (30) veranlassen, das Auswuchten zu ermöglichen.

9. Steuerung nach einem der Ansprüchen 1 bis 8, **dadurch gekennzeichnet, daß** anstelle der oder neben den durch die Kennung im Speicher (36) aufgerufenen Daten mittels Eingabetastatur (48) von der Bedienung eingegebene Daten zusammen mit den erzeugten Unwuchtsignalen den Rechner (30) veranlassen, das Auswuchten zu ermöglichen.

10. Steuerung nach Anspruch 9, **dadurch gekennzeichnet, daß** die Tastatur (48) ein Hilfs- und Funktionstastenfeld ist, welches dem Bediener frei zugänglich ist.

11. Steuerung nach Anspruch 9, **dadurch gekennzeichnet, daß** die Tastatur (48) ganz oder teilweise unter Verschluß (49) abgedeckt ist.

12. Steuerung nach Anspruch 9, **dadurch gekennzeichnet, daß** die Tastatur (48) ganz oder teilweise nach Schalten eines Elektrokontakt- Schlüsselschalters (49) benutzbar wird.

13. Steuerung nach Anspruch 9, **dadurch gekennzeichnet, daß** die Tastatur (48) ganz oder teilweise nach Eingabe eines Pass- oder Schlüsselwortes (50) in den Rechner (30) benutzbar wird.

14. Steuerung nach einem der Ansprüche 1 bis 4, **dadurch gekennzeichnet, daß** der Informationsträger (43) durch den der Maschine zum Auswuchten zugeordneten Rechner (30) mittels eines Ausgabegerätes (54) hergestellt wird.

15. Steuerung nach einem der Ansprüche 1 bis 4, **dadurch gekennzeichnet, daß** Informationsträger (43) durch einen anderen Rechner (60) mit Peripheriegeräten (62, 64, 66) und Eingabemitteln (67, 68) als den der Maschine zum Auswuchten zugeordneten Rechner (30) hergestellt werden.

a    b    c

36

34

12

16

14

18

22

20

26

28

24    10

RECHNER    30

A/D

Signal-
Verarb.    32

54

Arbeits-
Speicher    34

52

49

48

Wuchtkörp
Datensp.    36

56

SAMURAI

50

Interface    46

Fig. 1

44

42

43

67

64

60

68

66

62

Fig. 2

EP 0 418 574 A2

## REUTLINGER — LOHNSCHEIN

| Auftrags-Nr. | Type | | Kunde | | Auftragsmenge | ME | Datum |
|---|---|---|---|---|---|---|---|
| 5608.0339 | Antrieb | | 1.444.015 | | 10 | SK | 06.07.89 |

| UAN | Artikel-Nr./Zeichnungs-Nr. | Benennung | | | Menge UA | ME | Anfangstermin | Endtermin |
|---|---|---|---|---|---|---|---|---|
| 51 | 1.211.017-02 | Riemenscheibe | | | 10 | SK | 13-07 | 14-07 |

| Abg-Nr. | Kostenstelle | Beschreibung | | LG | Rüstzeit | Stückzeit | ZE | Vorgabezeit |
|---|---|---|---|---|---|---|---|---|
| 5 | 112 | Auswuchten Tol.: 2,5 g mm | | | 0,3 | 0,1 | ME | 1,3 |

Code Nr :  ~72  |||||||||| 3301 0137

Order Nr :  |||||||||| 5608 0339

CODE
TM - Teilmeldung, period. Rückmeldg.
FM - Fertigmeldung
NM - Nachmeldung, wenn Fertigmeldg. schon erfolgt ist
KM - Korrekturmeldung, ...
SK - Sonderkosten
UN - Ungeplante Rückmeldung

| Code | Personal-Nr. | Personal-Name | Soll-Zeit | Ist-Zeit | LG | Gutmenge | Ausschußmenge | Kontrolle | Datum |
|---|---|---|---|---|---|---|---|---|---|
| | 622 | | 1,3 | | | | | | |

Fig. 3

Code Nr :  |||||||||| 3301 0137

Order Nr :  |||||||||| 5608 0339

Fig. 4